# EUROPÄISCHE PATENTSCHRIFT

(11) **EP 2 483 111 B1**
(45) Veröffentlichungstag und Bekanntmachung des Hinweises auf die Patenterteilung: **06.11.2013**
(21) Anmeldenummer: 10810746.7
(22) Anmeldetag: 23.09.2010
(51) Int. Cl.: B60R 21/2165

(54) **VERKLEIDUNGSFORMTEIL ZUM ABDECKEN EINES AIRBAGS IN EINEM KRAFTFAHRZEUG**
MOULDED TRIM COMPONENT FOR COVERING AN AIRBAG IN A MOTOR VEHICLE
PIÈCE MOULÉE DE REVÊTEMENT DESTINÉE À RECOUVRIR UN SAC GONFLABLE DANS UN VÉHICULE À MOTEUR

(30) Priorität: 30.09.2009 DE 102009043498
(43) Veröffentlichungstag der Anmeldung: 08.08.2012
(73) Patentinhaber: Johnson Controls Interiors GmbH & Co. KG, 47929 Grefrath (DE)
(72) Erfinder: THIELHOM, Peter, 45470 Mülheim/Ruhr (DE)
(74) Vertreter: von dem Borne, Andreas
(86) Internationale Anmeldenummer: PCT/EP2010/005814
(87) Internationale Veröffentlichungsnummer: WO 2011/038856

(56) Entgegenhaltungen:
- EP-A1- 1 380 477
- EP-A1- 1 655 184
- DE-A1- 10 241 715
- DE-A1-102006 027 082
- DE-B3-102006 055 861

## Beschreibung

Die Erfindung betrifft ein Verkleidungsformteil zum Abdecken eines Airbags in einem Kraftfahrzeug mit zumindest
- einem Träger, welcher entlang einer einen Öffnungsdeckel begrenzenden Öffnungslinie geschwächt ist,
- einer auf dem Träger angeordneten Zwischenschicht, welche entlang einer der Öffnungslinie des Trägers zugeordneten Aufreißlinie geschwächt ist und
- einer auf der Zwischenschicht angeordneten Dekorschicht aus Leder, welche im Bereich der Aufreißlinie der Zwischenschicht keine lokale Schwächung aufweist.

Bei dem Träger handelt es sich z. B. um ein Kunststoff-Formteil, welches z. B. als Spritzgussteil oder dergleichen gefertigt sein kann. Bei der auf dem Träger befestigten, z. B. verklebten Zwischenschicht kann es sich insbesondere um ein Gewirke, nämlich ein Abstandsgewirke handeln. Schwächung meint im Rahmen der Erfindung z. B. eine Schwächung der Dicke bzw. eine lokale Dickenreduzierung im Sinn einer Kerbe aber auch eine Perforation oder ähnliches. Die Dekorschicht aus Leder wird in der Regel mit dem Abstandsgewirke verklebt. Ein auf diese Weise gebildetes Verkleidungsformteil wird z. B. als Innenraumabdeckung in einem Fahrzeug, z. B. als Instrumententafelabdeckung, Türinnenverkleidung oder dergleichen eingesetzt. Damit der hinter dem Verkleidungsformteil, nämlich hinter dem Öffnungdeckel des Verkleidungsformteils in einem Schusskanal angeordnete Airbag sicher auslösen kann, ist der Träger entlang der Öffnungslinie unter Bildung des Öffnungsdeckels geschwächt. Der Öffnungsdeckel ist im Wesentlichen rechteckig ausgebildet, wobei die Schwächung beim Auslösen des Airbags in der Regel an drei Seiten aufbricht, so dass der Öffnungsdeckel schamierartig aufklappt. Der Öffnungsdeckel kann dabei auch aus mehreren Deckeln bzw. Deckelabschnitten bestehen, die einzeln schamierartig aufklappen. Im Zuge des Öffnens reißt die Zwischenschicht, z. B. das Abstandsgewirke ebenfalls entlang der Aufreißlinie auf.

Um zu vermeiden, dass der Öffnungsdeckel bzw. Airbagdeckel vom Fahrzeuginnenraum aus zu sehen ist, ist das gesamte Verkleidungsformteil in der Regel mit einer Dekorschicht aus z. B. Leder versehen, ohne dass im Bereich des Öffnungsdeckels Nähte oder dergleichen vorgesehen sind. Um dennoch ein definiertes Aufreißen der Airbagabdeckung bei der Airbagauslösung sicher zu stellen, wurde in der Vergangenheit die Dekorschicht aus Leder rückseitig mit einer Schwächungslinie versehen, welche im Wesentlichen mit der Aufreißlinie der Zwischenschicht fluchtet. Die Herstellung derartiger Airbagabdeckungen ist jedoch aufwändig. Außerdem sind rückseitige Schwächungen der Lederschicht nachteilig, da diese sich insbesondere im Zuge der Alterung die rückseitige Schwächungslinie der Lederschicht auf der Oberfläche abzeichnen können und dann aus dem Fahrzeuginnenraum sichtbar werden.

Aus diesem Grunde wurde bereits vorgeschlagen, auf eine rückseitige Schwächung des Leders zu verzichten (vgl. DE 10 2006 055 861 B3). Um bei der bekannten Ausführungsform dennoch ein definiertes Öffnen des Airbags sicher zu stellen, wurde vorgeschlagen, die Klebeverbindung zwischen Lederschicht und Zwischenschicht (Abstandsgewirke) innerhalb eines längs der Aufreißlinie verlaufenden Streifens auszusparen. Nachteilig ist bei dieser Ausgestaltung die Tatsache, dass der Kleberauftrag definiert gesteuert erfolgen muss und dass insbesondere eine exakte Positionierung der einzelnen Schichten relativ zueinander gewährleistet werden muss. Damit wird die Herstellung insgesamt aufwändiger.

Auch aus der DE 10 2006 027 082 A1 ist ein Verkleidungsformteil gemäß den Oberbegriffs des Anspruchs 1 bekannt, bei welcher die Dekorschicht im Bereich der Öffnungslinie des Trägerteils bzw. der Zwischenschicht ungeschwächt sein soll.

Der Erfindung liegt die Aufgabe zugrunde, ein Verkleidungsformteil zum Abdecken eines Airbags in einem Kraftfahrzeug der eingangs beschriebenen Art zu schaffen, welches hohen ästhetischen Anforderungen genügt und wirtschaftlich herstellbar ist und dabei dennoch eine sichere Auslösung eines Airbags gewährleistet.

Diese Aufgabe wird durch ein Verkleidungsformteil gemäß Anspruch 1 gelöst. Besonders bevorzugt verläuft die Aufreißlinie der Zwischenschicht dabei teilweise bzw. abschnittsweise nicht parallel zu der Öffnungslinie des Trägers. Da die Öffnungsdeckel herkömmlicher AirbagAbdeckungen in der Draufsicht in der Regel rechteckig ausgebildet sind, schlägt die Erfindung in einer besonders bevorzugten Weiterbildung vor, dass die Aufreißlinie der Zwischenschicht von der Rechteckform abweicht. Sie kann z. B. in der Draufsicht elliptisch oder oval ausgebildet sein. Vorzugsweise sind lediglich Bereiche bzw. Abschnitte der Aufreißlinie gekrümmt ausgebildet. So kann die Aufreißlinie z. B. entlang zweier gegenüberliegend paralleler Seitenlinien des Deckels parallel zu den Seitenlinien des Deckels verlaufen und in den übrigen Bereichen, d. h. im Bereich der beiden anderen gegenüberliegenden Seitenlinien des Deckels bogenförmig verlaufen, so dass sich insgesamt in der Draufsicht etwa eine ovale Form ergibt. Jedenfalls folgt die Aufreißlinie der Zwischenschicht nicht vollständig der Öffnungslinie des Trägers.

Die Erfindung geht dabei von der überraschenden Erkenntnis aus, dass eine sichere und definierte Airbagauslösung mit einer lokal ungeschwächten Lederschicht (d. h. ohne eigene Schwächungslinie) auch dann gewährleistet werden kann, wenn auf eine definierte Aussparung der Klebeverbindung verzichtet und folglich vollflächig verklebt wird. Dieses hat fertigungstechnisch den Vorteil, dass beim Klebstoffauftrag nicht auf definierte Aussparungen geachtet werden muss. Außerdem ist eine exakte Positionierung der Lederschicht nicht erforderlich. Da auf eine Schwächung der Lederschicht verzichtet wird, genügt die erfindungsgemäße Verkleidung auch hohen ästhetischen Ansprüchen in modemen Fahrzeugen. Überraschenderweise wird die Öffnungsfunktion des Airbags nicht beeinträchtigt. Es reicht aus, wenn in an sich bekannter Weise sowohl das Trägerteil als auch die Zwischenschicht, z. B. das Gewirke geschwächt bzw. perforiert sind. Die Schwächung bzw. Perforation des Gewirkes definiert die Aufreißlinie auch der darüber angeordneten Lederschicht, ohne dass die Lederschicht selbst geschwächt sein muss und ohne dass auf eine Aussparung der Klebeverbindung verzichtet werden muss. Besonders bevorzugt lässt sich dieses - wie bereits beschrieben - dadurch gewährleisten, dass der Verlauf der Aufreißlinie der Zwischenschicht ganz bewusst von dem Verlauf der Öffnungslinie des Trägers abweicht und folglich der Öffnungslinie des Trägers nicht folgt.

In besonders bevorzugter Weiterbildung schlägt die Erfindung vor, dass die Dekorschicht aus Leder, welche auf der Zwischenschicht befestigt, z. B. verklebt wird, eine Dicke von 0,4 mm bis 0,8 mm, vorzugsweise 0,5 mm bis 0,7 mm, z. B. etwa 0,6 mm aufweist. Es wird folglich mit einem verhältnismäßig dünnen Leder gearbeitet, welches selbst ohne lokale Schwächung definiert aufreißen kann. Eine solche Lederschicht mit verhältnismäßig geringer Dicke lässt sich wirtschaftlich besonders bevorzugt dadurch erzeugen, dass das zunächst hergestellte und zugerichtete Leder im Zuge der Weiterverarbeitung gespalten, vorzugsweise trocken gespalten wird, und zwar bis auf die gewünschte Dicke.

Um ein besonders zuverlässiges Aufreißen der Lederschicht als Folge des Aufreißens der Aufreißlinie des Gewirkes zu gewährleisten, ist es zweckmäßig, wenn ein Leder mit einer verhältnismäßig geringen Bruchdehnung verwendet wird. Die Erfindung schlägt daher vorzugsweise vor, dass das Leder, z. B. das auf die gewünschte Dicke gespaltene Leder, eine Bruchdehnung von maximal 40 %, besonders bevorzugt maximal 35 % aufweist. Zweckmäßig ist eine Bruchdehnung von 25 % bis 40 %, besonders bevorzugt 30 % bis 35 %.

Femer ist es zweckmäßig, wenn Leder verwendet wird, welches eine geringere Weiterreißkraft aufweist, als die in der Praxis bislang üblicherweise für Airbagabdeckungen eingesetzten Lederarten. So schlägt die Erfindung vor, dass das Leder bzw. die Dekorschicht aus Leder eine Weiterreißkraft von weniger als 12 N aufweist, vorzugsweise weniger als 10 N. Weiterreißkraft meint dabei zumindest die Weiterreißkraft in Längs- oder Querrichtung, vorzugsweise sowohl in Längs- als auch in Querrichtung. Vorzugsweise ist die Weitereißkraft des auf die oben angegebene Dicke trocken gespaltenen Leders gemeint.

Ein Leder mit derartigen Eigenschaften gewährleistet auch ohne lokale Schwächung und bei vollflächiger Verklebung ein definiertes Aufreißen, hervorgerufen durch das definierte Aufreißen des Gewirkes.

In bevorzugter Weiterbildung ist vorgesehen, dass für die Dekorschicht ein chromfrei gegerbtes Leder verwendet wird. Grundsätzlich besteht die Möglichkeit, das (gegerbte) Leder im Zuge der Herstellung in bekannter Weise zu trocknen, z. B. im Wege der Klammertrocknung. Dabei wird das Leder mithilfe von Klammem auf einen Rahmen aufgespannt und in einen Trockner eingebracht. Besonders bevorzugt schlägt die Erfindung jedoch vor, dass die Trocknung im Wege der Vakuum-Trocknung erfolgt. Dabei wird das Leder nicht mittels Klammern auf einen Rahmen aufgespannt, sondern über Unterdruck bzw. Vakuum. Versuche haben ergeben, dass sich das auf diese Weise getrocknete Leder besonders gut für den genannten Zweck einsetzen lässt.

Wie bereits beschrieben, ist im Rahmen der Erfindung eine vollflächige Verklebung des Leders auf der Zwischenschicht, z. B. dem Gewirke, vorgesehen. Vollflächige Verklebung meint dabei im Rahmen der Erfindung eine vollflächige Verklebung in der Umgebung der Aufreißlinie. Es wird folglich in der Umgebung der Aufreißlinie die Klebstoffverbindung nicht ausgespart. Im Rahmen der Erfindung besteht jedoch die Möglichkeit, in sonstigen Bereichen des Verkleidungsformteils Aussparungen der Klebeverbindung vorzusehen. So besteht grundsätzlich die Möglichkeit, im Bereich des Öffnungsdeckels selbst oder in Teilbereichen des Öffnungsdeckels auf eine Klebeverbindung zu verzichten. Aus Fertigungsgründen ist jedoch eine vollflächige Verklebung zu bevorzugen. Auch die Verklebung der Zwischenschicht auf dem Träger erfolgt in der Regel vollflächig.

Für die Verklebung können verschiedene Klebstoffe verwendet werden. Bevorzugt wird die Dekorschicht aus Leder mittels eines reaktivierbaren Schmelz-klebers auf der Zwischenschicht befestigt. Auch die Zwischenschicht kann mittels eines reaktivierbaren Schmelzklebers auf dem Träger befestigt werden. Dabei besteht die Möglichkeit, den Schmelzkleber auf die Dekorschicht, die Zwischenschicht und/oder den Träger aufzusprühen oder aufzuwalzen.

Grundsätzlich umfasst die Erfindung Ausführungsformen, bei denen das gesamte Verkleidungsformteil mit einer einheitlichen und folglich einstückigen Dekorschicht aus Leder verkleidet wird. Diese einstückige Dekorschicht aus Leder kann dann über ihre gesamte Fläche dieselbe Dicke aufweisen. Es besteht jedoch insbesondere bei großen Verkleidungsformteilen auch die Möglichkeit, die einstückige Dekorschicht aus Leder mit Bereichen unterschiedlicher Dicke zu versehen. So kann das Leder in Bereichen, die verhältnismäßig weit von der Airbagöffnung entfernt sind, eine größere Dicke von z. B. 1 mm oder mehr aufweisen und lediglich in der Umgebung der Airbagabdeckung bzw. des Öffnungsdeckels auf das oben beschriebene Maß heruntergespalten sein. Auch bei diesen Ausführungsformen wird jedoch auf lokale Schwächungen bzw. Schwächungslinien (z. B. Einkerbungen) des Leders entlang der Aufreißlinie des Gewirkes verzichtet.

Optional besteht die Möglichkeit, die Dekorschicht aus mehreren Leder-abschnitten zusammenzusetzen, wobei diese Lederabschnitte eine unterschiedliche Dicke aufweisen können. So besteht die Möglichkeit, im Bereich des Öffnungsdeckels und in dessen Umgebung einen Lederabschnitt mit einer geringeren Dicke vorzusehen und in den übrigen Bereichen einen Lederabschnitt mit größerer Dicke vorzusehen. Die einzelnen Lederabschnitte können miteinander verbunden, z. B. über eine Naht miteinander vernäht sein. Diese Naht bildet jedoch keine Aufreißlinie, sondern es handelt sich in der Regel um Ziemähte, welche aus ästhetischen Gründen bei der Fahrzeugverkleidung vorgesehen werden.

Im Folgenden wird die Erfindung anhand einer lediglich ein Ausführungsbeispiel darstellenden Zeichnung näher erläutert. Es zeigen
- Fig. 1: ein erfindungsgemäßes Verkleidungsformteil in einer vereinfachten Draufsicht
- Fig. 2: einen schematisch vereinfachten Schnitt durch den Gegenstand nach Fig. 1 und
- Fig. 3: eine abgewandelte Ausführungsform des Gegenstandes nach Fig. 1.

In den Figuren ist ein Verkleidungsformteil 1 zum Abdecken eines (nicht dargestellten) Airbags in einem Kraftfahrzeug dargestellt. Dieses Verkleidungsformteil 1 besteht in seinem grundsätzlichen Aufbau aus einem Träger 2, einer Zwischenschicht 5 und einer Dekorschicht 7.

Der Träger 2 ist in der Regel als Kunststoff-Formteil, z. B. Spritzgussteil ausgebildet. Es kann sich um einen Träger 2 für eine Instrumententafel oder eine sonstige Innenraumabdeckung handeln. Hinter dem Verkleidungsformteil 1 bzw. hinter dem Träger 2 ist in einem nicht dargestellen Schusskanal ein nicht dargestellter Airbag angeordnet.

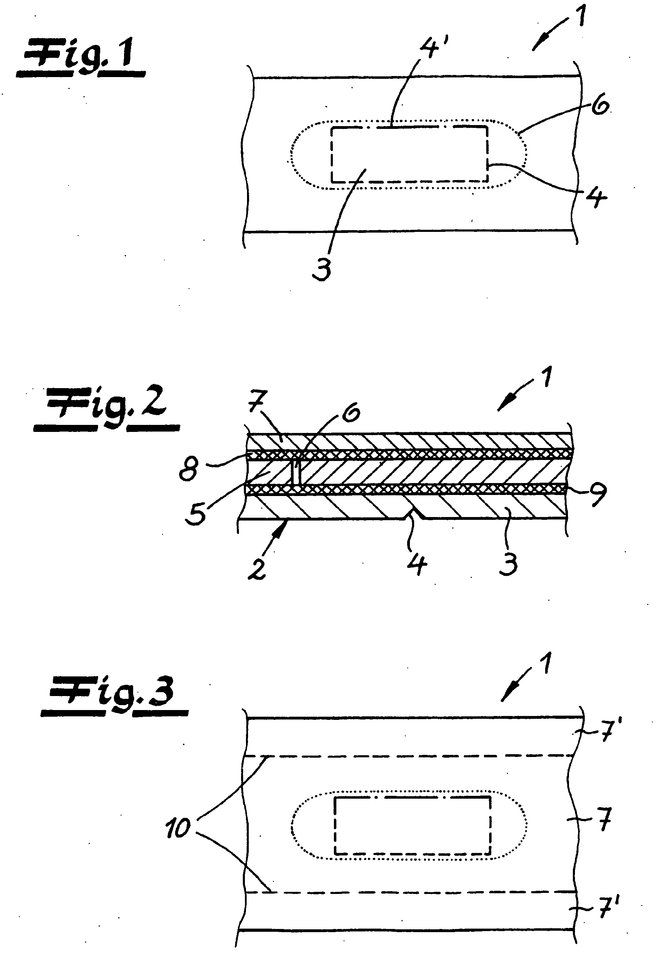

Aus einer vergleichenden Betrachtung der Fig. 1 und 2 ergibt sich dabei zunächst einmal, dass der Träger 2 entlang einer Öffnungslinie 4 geschwächt ist. Diese Schwächung bzw. Öffnungslinie 4 definiert einen Öffnungsdeckel 3 des Trägers. Der Öffnungsdeckel 3 ist dabei in der Draufsicht im Wesentlichen rechteckig ausgebildet. Die die Öffnungslinie 4 bildende Schwächung ist dabei im Ausführungsbeispiel an drei Seitenlinien dieses Rechtecks vorgesehen. Die vierte Seitenlinie 4' bildet gleichsam ein Öffnungsschamier, so dass der Deckel 2 bei der Airbagauslösung gleichsam aufklappt, indem der Träger 2 entlang der Öffnungslinie 4 aufreißt bzw. aufbricht. Der Öffnungsdeckel klappt folglich "fensterartig" auf. Es sind dabei auch abgewandelte Ausführungsformen möglich, bei denen der Öffnungsdeckel nach Art eines "Doppelfensters" aus zwei aufklappenden Abschnitten besteht. Eine solche Ausführungsform ist nicht dargestellt.

Femer ergibt sich aus einer vergleichenden Betrachtung der Fig. 1 und 2, dass die auf dem Träger 2 befestigte Zwischenschicht 5 entlang einer Aufreißlinie 6 geschwächt ist. Diese Aufreißlinie 6 kann z. B. als Perforation ausgebildet sein. Die Zwischenschicht 5 selbst ist z. B. als Abstandsgewirke ausgebildet. Dabei ist angedeutet, dass die Aufreißlinie 6 der Zwischenschicht 5 zwar der Öffnungslinie 4 des Trägers 2 "zugeordnet" ist, die Aufreißlinie 6 fluchtet jedoch nicht mit der Öffnungslinie 4. Vielmehr verläuft die Aufreißlinie 6 der Zwischenschicht 5 - bezogen auf den Öffnungsdeckel 3 - außerhalb der Öffnungslinie 4 des Trägers 2. Insbesondere in Fig. 1 ist angedeutet, dass die Aufreißlinie 6 der Zwischenschicht 5 nicht über ihre gesamte Länge parallel zu der Öffnungslinie 4 des Trägers 2 verläuft und folglich nicht der Öffnungslinie folgt. Während die Öffnungslinie 4 des Öffnungsdeckels 3 im Wesentlichen von einem Rechteck oder von den bzw. einigen Seiten des Rechtecks gebildet wird, hat die Aufreißlinie 6 der Zwischenschicht 5 eine von der Rechteckform abweichende Form, nämlich eine "teilweise" ovale oder elliptische Form. So ist in Fig. 1 erkennbar, dass die Aufreißlinie 6 der Zwischenschicht 5 entlang der Längsseiten des Deckels 3 (im Wesentlichen) parallel zu den Seitenlinien 4, 4' des Deckels 3 verläuft. Im Bereich der (kurzen) Querseiten des Deckels 3 verläuft die Aufreißlinie 6 der Zwischenschicht 5 dagegen bogenförmig und folglich nicht parallel zu der Öffnungslinie 4 des Trägers 2, so dass sich insgesamt der in Fig. 1 erkennbare Verlauf der Aufreißlinie 6 ergibt, welcher als oval bezeichnet werden kann.

Erfindungsgemäß wird im Bereich der Aufreißlinie 6 der Zwischenschicht 5 auf eine Schwächung der Lederschicht 7 verzichtete. In Fig. 2 ist folglich ein lokal ungeschwächtes Leder 7 dargestellt. Die Dekorschicht 7 aus Leder ist dabei vollflächig mit der Zwischenschicht 5 verklebt und zwar über eine Klebstoffschicht 8. Auf eine Aussparung der Klebstoffschicht 8 im Bereich der Aufreißlinie wird folglich verzichtet. Im Übrigen ist erkennbar, dass das Gewirke 5 mittels einer Klebstoffschicht 9 auf dem Träger 2 befestigt wird. Auch hier erfolgt eine vollflächige Verklebung.

Das Leder weist z. B. eine Dicke von 0,6 mm auf, indem es auf diese Dicke trocken gespalten wird. Dabei wird vorzugsweise ein chromfrei gegerbtes Leder verwendet, welches im Wege der Vakuum-Trocknung getrocknet wird. Das verwendete Leder kann eine Bruchdehnung von z. B. 30 bis 35 % und eine Weiterreißkraft von weniger als 10 N aufweisen. Die Verklebung erfolgt dabei z. B. mit einem reaktivierbaren Schmelzkleber, der z. B. aufgesprüht oder aufgewalzt wird. Jedenfalls wird im Rahmen der Erfindung ein definiertes Aufreißen der Lederschicht 7 und folglich ein definiertes Öffnen des Airbags gewährleistet, ohne dass eine Schwächung des Leders im Bereich der Aufreißlinie 6 des Gewirkes 5 vorgesehen ist und ohne dass eine Klebstoff-Aussparung im Bereich der Aufreißlinie 6 vorgesehen ist.

In Fig. 1 ist dabei eine Ausführungsform dargestellt, bei welcher der gesamte Träger 2 mit einer einstückigen Dekorschicht 7 aus Leder verkleidet ist. Das Leder bzw. die Dekorschicht 7 weist in diesem Ausführungsbeispiel über die gesamte Fläche im Wesentlichen dieselbe Dicke von z. B. 0,5 bis 0,7, vorzugsweise 0,6 mm auf.

In der abgewandelten Ausführungsform nach Fig. 3 wird ein Träger 2 mit einer Dekorschicht verkleidet, welche sich aus mehreren Dekorschicht-Abschnitten 7 bzw. 7' zusammensetzt. Diese Dekorschicht-Abschnitte 7 bzw. 7' weisen eine unterschiedliche Dicke auf. So ist ein erster Dekorschicht-Abschnitt 7 vorgesehen, welcher die gesamte Airbag-Öffnung bzw. den Öffnungsdeckel und dessen Umgebung abdeckt bzw. überspannt. Dieser Dekorschicht-Abschnitt 7 entspricht der in den Fig. 1 und 2 dargestellten Dekorschicht 7 mit den beschriebenen Merkmalen, welche die erfindungsgemäßen Vorteile bewirken. Bei dem Ausführungsbeispiel nach Fig. 3 ist dieser Dekorschicht-Abschnitt 7 jedoch mit weiteren Dekorschicht-Abschnitten 7' verbunden, z. B. über Nähte 10 vernäht. Bei diesen Nähten 10 handelt es sich jedoch nicht um Aufreißlinien, sondern um reine Ziemähte. Die Dekorschicht-Abschnitte 7' können nun eine größere Dicke von z. B. 1 mm oder mehr aufweisen. Im Rahmen der Erfindung besteht auch die Möglichkeit, die in Fig. 3 dargestellte Ausführungsform mit einem einstückigen Leder zu realisieren, welches dann im Bereich der Abschnitte 7' eine erste größere Dicke und im Abschnitt 7 eine zweite, geringere Dicke aufweist. Das zunächst dickere Leder wird folglich lediglich in dem Bereich 7 auf das erforderliche Maß heruntergespalten. Einzelheiten sind in den Figuren nicht dargestellt.

## Patentansprüche

1. Verkleidungsformteil (1) zum Abdecken eines Airbags in einem Kraftfahrzeug, mit zumindest
- einem Träger (2), welcher entlang einer einen Öffnungsdeckel (3) begrenzenden Öffnungslinie (4) geschwächt ist,
- einer auf dem Träger (2) angeordneten Zwischenschicht (5), welche entlang einer der Öffnungslinie des Trägers zugeordneten Aufreißlinie (6) geschwächt ist und
- einer auf der Zwischenschicht (5) angeordneten Dekorschicht (7) aus Leder, welche im Bereich der Aufreißlinie (6) der Zwischenschicht (5) keine lokale Schwächung aufweist,
wobei die Dekorschicht (7) aus Leder zumindest im Bereich der Aufreißlinie (6) der Zwischenschicht (5) oder zumindest in der Umgebung der Aufreißlinie (6) vollflächig mit der Zwischenschicht (5) verklebt ist, **dadurch gekennzeichnet,**
**daß** die Aufreißlinie (6) der Zwischenschicht (5) bezogen auf den Öffnungsdeckel (3), außerhalb der Öffnungslinie (4) des Trägers (2) verläuft.

2. Verkleidungsformteil nach Anspruch 1, **dadurch gekennzeichnet, dass** die Aufreißlinie (6) der Zwischenschicht (5) zumindest bereichsweise oder abschnittsweise nicht parallel zu der Öffnungslinie (4) des Trägers (2) verläuft.

3. Verkleidungsformteil nach Anspruch 2, **dadurch gekennzeichnet, dass** die Aufreißlinie (6) der Zwischenschicht (5) in der Draufsicht von einer quadratischen oder rechteckigen Form abweicht und z. B. elliptisch oder oval oder bereichsweise elliptisch oder oval bzw. bogenförmig ausgebildet ist.

4. Verkleidungsformteil nach einem der Ansprüche 1 bis 3, **dadurch gekennzeichnet, dass** die Dekorschicht (7) aus Leder, vorzugsweise aus trocken gespaltenem Leder, eine Dicke von 0,4 mm bis 0,8 mm, vorzugsweise 0,5 mm bis 0,7 mm, z. B. etwa 0,6 mm aufweist.

5. Verkleidungsformteil nach einem der Ansprüche 1 bis 4, **dadurch gekennzeichnet, dass** das Leder eine Bruchdehnung von bis zu 40 %, z. B. bis zu 35 %, vorzugsweise 25 % bis 40 %, z. B. 30 % bis 35 % aufweist.

6. Verkleidungsformteil nach einem der Ansprüche 1 bis 5, **dadurch gekennzeichnet, dass** das Leder eine Weiterreißkraft von weniger als 12 N, vorzugsweise weniger als 10 N aufweist.

7. Verkleidungsformteil nach einem der Ansprüche 1 bis 6, **dadurch gekennzeichnet, dass** für die Herstellung der Dekorschicht (7) ein chromfrei gegerbtes Leder verwendet wird.

8. Verkleidungsformteil nach einem der Ansprüche 1 bis 7, **dadurch gekennzeichnet, dass** für die Herstellung der Dekorschicht (7) ein vakuum-getrocknetes Leder verwendet wird.

9. Verkleidungsformteil nach einem der Ansprüche 1 bis 8, **dadurch gekennzeichnet, dass** die Zwischenschicht (5) vollflächig mit dem Träger (2) verklebt ist.

10. Verkleidungformteil nach einem der Ansprüche 1 bis 9, **dadurch gekennzeichnet, dass** die Dekorschicht (7) aus Leder mittels eines reaktivierbaren Schmelzklebers (8) auf der Zwischenschicht (5) befestigt ist.

11. Verkleidungsformteil nach einem der Ansprüche 1 bis 10, **dadurch gekennzeichnet, dass** die Zwischenschicht (5) mittels eines reaktivierbaren Schmelzklebers (9) auf dem Träger (2) befestigt ist.

12. Verkleidungsformteil nach Anspruch 10 oder 11, **dadurch gekennzeichnet, dass** der Schmelzkleber (8, 9) auf die Dekorschicht (7), die Zwischenschicht (5) und/oder den Träger (2) aufgesprüht oder aufgewalzt wird.

13. Verkleidungsformteil nach einem der Ansprüche 1 bis 12, **dadurch gekennzeichnet, dass** die Dekorschicht aus mehreren miteinander verbundenen, z. B. vernähten Dekorschicht-Abschnitten (7, 7') aus Leder unterschiedlicher Dicke besteht, wobei die Dicke des Leders im Bereich des Öffnungsdeckels geringer als die Dicke des Leders in den übrigen Bereichen ist.

## Claims

1. A moulded trim component (1) for covering an airbag in a motor vehicle, with at least
- a support (2) which is weakened along an opening line (4) delimiting an opening cover (3),
- an intermediate layer (5) arranged on the support (2), which intermediate layer is weakened along a tear-open line (6) associated with the opening line of the support and
- a decorative layer (7) made of leather, arranged on the intermediate layer (5), which decorative layer has no local weakening in the region of the tear-open line (6) of the intermediate layer (5),
wherein the decorative layer (7) made of leather is adhesively bonded over the entire surface with the intermediate layer (5) at least in the region of the tear-open line (6) of the intermediate layer (5) or at least in the vicinity of the tear-open line (6), **characterized in**
**that** the tear-open line (6) of the intermediate layer (5) runs outside the opening line (4) of the support (2) with respect to the opening cover (3).

2. The moulded trim component according to Claim 1, **characterized in that** at least in regions or sections the tear-open line (6) of the intermediate layer (5) does not run parallel to the opening line (4) of the support (2).

3. The moulded trim component according to Claim 2, **characterized in that** the tear-open line (6) of the intermediate layer (5) deviates in top view from a square or rectangular shape and e.g. is elliptical or oval or partially elliptical or oval or respectively arc-shaped in construction.

4. The moulded trim component according to one of Claims 1 to 3, **characterized in that** the decorative layer (7) made of leather, preferably of dry split leather, has a thickness of 0.4 mm to 0.8 mm, preferably 0.5 mm to 0.7 mm, e.g. approximately 0.6 mm.

5. The moulded trim component according to one of Claims 1 to 4, **characterized in that** the leather has an elongation at break of up to 40%, e.g. up to 35%, preferably 25% to 40%, e.g. 30% to 35%.

6. The moulded trim component according to one of Claims 1 to 5, **characterized in that** the leather has a tear propagation strength of less than 12 N, preferably less than 10 N.

7. The moulded trim component according to one of Claims 1 to 6, **characterized in that** a chrome-free tanned leather is used for the production of the decorative layer (7).

8. The moulded trim component according to one of Claims 1 to 7, **characterized in that** a vacuum-dried leather is used for the production of the decorative layer (7).

9. The moulded trim component according to one of Claims 1 to 8, **characterized in that** the intermediate layer (5) is adhesively bonded over the entire surface with the support (2).

10. The moulded trim component according to one of Claims 1 to 9, **characterized in that** the decorative layer (7) made of leather is fastened on the intermediate layer (5) by means of a reactivatable hot-melt adhesive (8).

11. The moulded trim component according to one of Claims 1 to 10, **characterized in that** the intermediate layer (5) is fastened on the support (2) by means of a reactivatable hot-melt adhesive (9).

12. The moulded trim component according to Claim 10 or 11, **characterized in that** the hot-melt adhesive (8, 9) is sprayed or rolled onto the decorative layer (7), the intermediate layer (5) and/or the support (2).

13. The moulded trim component according to one of Claims 1 to 12, **characterized in that** the decorative layer consists of several decorative layer sections (7, 7'), connected with one another e.g. sewn, made of leather of differing thickness, wherein the thickness of the leather in the region of the opening cover is less than the thickness of the leather in the remaining regions.

## Revendications

1. Pièce moulée d'habillage (1) destinée à recouvrir un airbag dans un véhicule automobile, comportant au moins
- un support (2) qui est fragilisé le long d'une ligne d'ouverture (4) limitant un couvercle d'ouverture (3),
- une couche intermédiaire (5) disposée sur le support (2) et qui est fragilisée le long d'une ligne de déchirure (6) associée à la ligne d'ouverture du support et
- une couche décorative (7) en cuir disposée sur la couche intermédiaire (5) et ne qui présente pas de fragilisation locale au niveau de la ligne de déchirure (6) de la couche intermédiaire (5),
la couche décorative (7) en cuir étant collée sur toute sa surface à la couche intermédiaire (5) du moins au niveau de la ligne de déchirure (6) de la couche intermédiaire (5) ou du moins aux alentours de la ligne de déchirure (6),
**caractérisée en ce que**
la ligne de déchirure (6) de la couche intermédiaire (5) s'étend en dehors de la ligne d'ouverture (4) du support (2) par rapport au couvercle d'ouverture (3).

2. Pièce moulée d'habillage selon la revendication 1, **caractérisée en ce que** la ligne de déchirure (6) de la couche intermédiaire (5), du moins par endroits ou par sections, ne s'étend pas parallèlement à la ligne d'ouverture (4) du support (2).

3. Pièce moulée d'habillage selon la revendication 2, **caractérisée en ce que** la ligne de déchirure (6) de la couche intermédiaire (5), vue en élévation, a une forme différente d'une forme carrée ou rectangulaire et a par exemple une conformation elliptique ou ovale ou elliptique ou ovale par endroits, voire arquée.

4. Pièce moulée d'habillage selon une des revendications 1 à 3, **caractérisée en ce que** la couche décorative (7) en cuir, de préférence en cuir découpé à sec, présente une épaisseur de 0,4 mm à 0,8 mm, de préférence 0,5 mm à 0,7 mm, par exemple environ 0,6 mm.

5. Pièce moulée d'habillage selon une des revendications 1 à 4, **caractérisée en ce que** le cuir présente un allongement à la rupture allant jusqu'à 40 %, par exemple jusqu'à 35 %, de préférence 25 % à 40 %, par exemple 30 % à 35 %.

6. Pièce moulée d'habillage selon une des revendications 1 à 5, **caractérisée en ce que** le cuir présente une force de poursuite de déchirure inférieure à 12 N, de préférence inférieure à 10 N.

7. Pièce moulée d'habillage selon une des revendications 1 à 6, **caractérisée en ce qu'**on utilise pour la fabrication de la couche décorative (7) un cuir tanné sans chrome.

8. Pièce moulée d'habillage selon une des revendications 1 à 7, **caractérisée en ce qu'**on utilise pour la fabrication de la couche décorative (7) un cuir séché sous vide.

9. Pièce moulée d'habillage selon une des revendications 1 à 8, **caractérisée en ce que** la couche intermédiaire (5) est collée sur toute sa surface au support (2).

10. Pièce moulée d'habillage selon une des revendications 1 à 9, **caractérisée en ce que** la couche décorative (7) en cuir est fixée au moyen d'une colle thermofusible réactivable (8) sur la couche intermédiaire (5).

11. Pièce moulée d'habillage selon une des revendications 1 à 10, **caractérisée en ce que** la couche intermédiaire (5) est fixée sur le support (2) au moyen d'une colle thermofusible réactivable (9).

12. Pièce moulée d'habillage selon la revendication 10 ou 11, **caractérisée en ce que** la colle thermofusible (8, 9) est pulvérisée ou laminée sur la couche décorative (7), la couche intermédiaire (5) et/ou le support (2).

13. Pièce moulée d'habillage selon une des revendications 1 à 12, **caractérisée en ce que** la couche décorative (7) est composée de plusieurs sections de couche décorative (7, 7') reliées ensemble, par exemple cousues, en cuir d'épaisseurs différentes, l'épaisseur du cuir étant moindre au niveau du couvercle d'ouverture que l'épaisseur du cuir ailleurs.
